# EUROPEAN PATENT APPLICATION

(11) **EP 2 670 152 A2**
(43) Date of publication of application: **04.12.2013**
(21) Application number: 12191603.5
(22) Date of filing: 07.11.2012
(51) Int. Cl.: H04N 21/266, H04N 21/438

(54) **Method and system for playing video streams**

(30) Priority: 01.06.2012 TW 101119817
(71) Applicant: Wistron Corporation, Hsichih, 22181 New Taipei City (TW)
(72) Inventor: Fang-Wen, Kuo, 221 New Taipei City (TW); Po-Hsu, Chen, 221 New Taipei City (TW)
(74) Representative: Becker Kurig Straus

(57) **Abstract**

A video stream playback method adapted to a video playback device with a network function is provided. The method includes defining a correspondence between a first virtual channel and a first video streaming service. A first application program for using the first video streaming service is installed in the video playback device. The method also includes automatically linking a plurality of independent video streams provided by the first video streaming service by using the first application program to establish a first video stream list. The first video stream list includes a uniform resource locator (URL) of each video stream. The method further includes automatically obtaining the video streams from the first video streaming service according to the first video stream list and continuously playing the video streams by using the first application program when the video playback device receives a first channel select command corresponding to the first virtual channel.

## Description

### CROSS-REFERENCE TO RELATED APPLICATION

This application claims the priority benefit of Taiwan application serial no. 101119817, filed June 01, 2012. The entirety of the above-mentioned patent application is hereby incorporated by reference herein and made a part of this specification.

### BACKGROUND OF THE INVENTION

### 1. Field of the Invention

The invention generally relates to a method and a system for playing video streams, and more particularly, to a method and a system for automatically and continuously playing a plurality of independent video streams.

### 2. Description of Related Art

A conventional TV set receives radio frequency (RF) signals from TV stations via an antenna or a cable to play cable or wireless TV programs. A user can watch all TV programs played on a channel by simply inputting the number of the channel with a remote control. When the user is about to switch channels, he or she can do so by inputting the number of the desired channel with the remote control or by pressing down the channel up/down keys on the remote control, which is very intuitional and convenient.

Along with the explosive growth of the Internet, video transmission through the Internet has become a new means to watch videos or TV programs. Regarding existing Internet video or Internet TV techniques, a specific application program has to be installed in advance in order to play programs provided by a corresponding online video service. To be specific, a user needs to manually start a specific application program, browse available programs, and select a desired program through the operation interface of the application program. The user has to change his or her operation habit of watching conventional TV programs and choose the desired program by using the four arrow keys, the "confirm/select" key, and the "enter" key on the remote control. Obviously, such an operation pattern is very complicated compared to the conventional one in which a channel is selected by directly inputting the number of the channel or pressing the channel up/down keys. Besides, different application programs have different operation interfaces, and programs provided through the Internet are numerous. Thereby, a user has to try very hard to choose the desired program on the screen.

### SUMMARY OF THE INVENTION

Accordingly, the invention is directed to a method and a system for playing video streams, in which a plurality of independent video streams is automatically and continuously played after a user turns on a video playback device and selects a virtual channel.

The invention provides a video stream playback method adapted to a video playback device with a network function. In the video stream playback method, the correspondence between a first virtual channel and a first video streaming service is defined, wherein a first application program for using the first video streaming service is installed in the video playback device. A plurality of independent video streams provided by the first video streaming service is automatically linked by the first application program to establish a first video stream list, wherein the first video stream list includes a uniform resource locator (URL) of each of the video streams. When the video playback device receives a first channel select command corresponding to the first virtual channel, the video streams are automatically obtained from the first video streaming service according to the first video stream list and continuously played by the first application program.

The invention provides a video stream playback method adapted to a video playback device with a network function, wherein a first application program for using a first video streaming service and a second application program for using a second video streaming service are installed in the video playback device. In the video stream playback method, a plurality of independent video streams provided by the first video streaming service is automatically linked by the first application program to establish a first video stream list, and a plurality of independent video streams provided by the second video streaming service is automatically linked by the second application program to establish a second video stream list. The correspondence between an integrated virtual channel and a master control program is defined, wherein the first application program and the second application program are coroutines of the master control program. The first application program and the second application program are called by the master control program to obtain the first video stream list and the second video stream list, and all the video streams in the first video stream list and the second video stream list are re-organized into an integrated video stream list. When the video playback device receives a integrated channel select command corresponding to the integrated virtual channel, the first application program and the second application program are called by the master control program according to the integrated video stream list to automatically obtain the video streams respectively from the first video streaming service and the second video streaming service and continuously play the video streams.

The invention provides a video stream playback system including a network interface, a remote command receiving module, a non-volatile storage unit, and a first application program module. The non-volatile storage unit records the correspondence between a first virtual channel and a first video streaming service. The first application program module is coupled to the network interface, the remote command receiving module, and the non-volatile storage unit. The first application program module provides a first application program for using the first video streaming service, wherein the first application program automatically links a plurality of independent video streams provided by the first video streaming service to establish a first video stream list, wherein the first video stream list includes a URL of each of the video streams. When the remote command receiving module receives a first channel select command corresponding to the first virtual channel, the first application program automatically obtains the video streams from the first video streaming service through the network interface according to the first video stream list and continuously plays the video streams.

The invention provides a video stream playback system including a network interface, a remote command receiving module, a first application program module, a second application program module, a main program module, and a non-volatile storage unit. The first application program module is coupled to the network interface and the remote command receiving module and provides a first application program for using a first video streaming service, wherein the first application program automatically links a plurality of independent video streams provided by the first video streaming service to establish a first video stream list. The second application program module is coupled to the network interface and the remote command receiving module and provides a second application program for using a second video streaming service, wherein the second application program automatically links a plurality of independent video streams provided by the second video streaming service to establish a second video stream list. The main program module is coupled to the remote command receiving module, the first application program module, and the second application program module and provides a master control program, wherein the first application program and the second application program are coroutines of the master control program. The non-volatile storage unit is coupled to the first application program module, the second application program module, and the main program module and records the correspondence between an integrated virtual channel and the master control program. The master control program calls the first application program and the second application program to obtain the first video stream list and the second video stream list and re-organizes all the video streams in the first video stream list and the second video stream list into an integrated video stream list. When the remote command receiving module receives a integrated channel select command corresponding to the integrated virtual channel, the master control program calls the first application program and the second application program according to the integrated video stream list to automatically obtain the video streams respectively from the first video streaming service and the second video streaming service through the network interface and continuously play the video streams.

As described above, in the invention, video streams are automatically collected and a video stream list is established by an application program. After the correspondence between the application program and a virtual channel is defined, independent video streams in the video stream list are automatically obtained and continuously played by the application program when a user selects the virtual channel. Thereby, the user needs not to click or set each individual video stream. Instead, the user can conveniently select a channel as operating a conventional TV to watch many online video stream files.

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram of a video stream playback system according to an embodiment of the invention.

FIG. 2 is a flowchart of a video stream playback method according to an embodiment of the invention.

FIG. 3 is a flowchart illustrating how a first application program automatically and continuously plays video streams according to a first video stream list according to an embodiment of the invention.

FIG. 4 is a diagram illustrating how video streams are switched and played according to an embodiment of the invention.

FIG. 5 is a flowchart of establishing a previous playback record and playing a video stream according to the previous playback record according to an embodiment of the invention.

FIG. 6 is a diagram of a video stream playback system according to another embodiment of the invention.

FIG. 7 is a flowchart of a video stream playback method according to another embodiment of the invention.

FIG. 8 is a flowchart of a master control program automatically and continuously playing video streams according to an integrated video stream list according to an embodiment of the invention.

FIG. 9 is a flowchart of a video stream playback method according to yet another embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

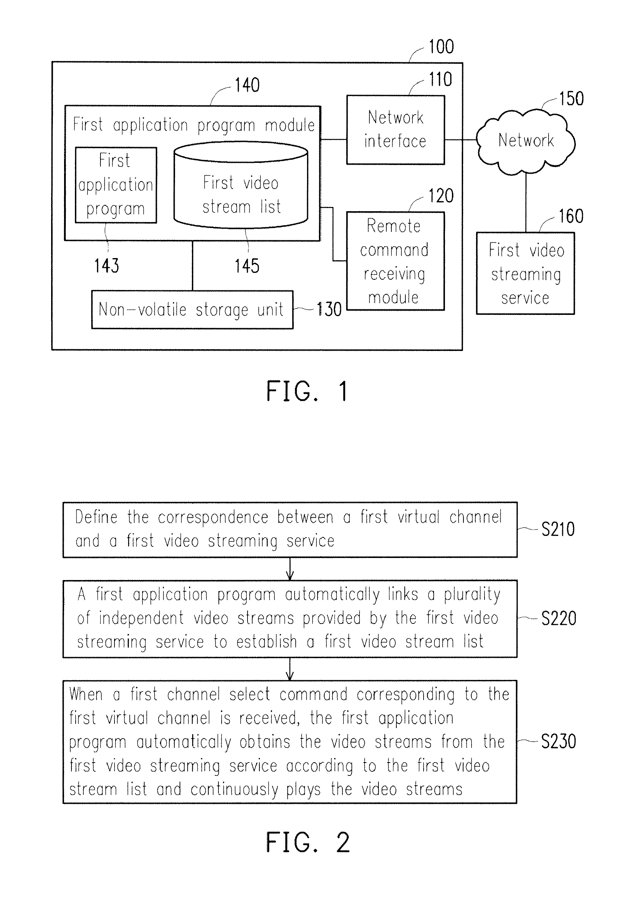

FIG. 1 is a diagram of a video stream playback system according to an embodiment of the invention. Referring to FIG. 1, the video stream playback system 100 includes a network interface 110, a remote command receiving module 120, a non-volatile storage unit 130, and a first application program module 140. In the present embodiment, the video stream playback system 100 is disposed in a video playback device with a network function. The video playback device may be a smart TV, an Internet TV, a smart phone, or a computer system with a display of its own. Or, the video playback device may also be a digital VCD player or a media box without any display.

The network interface 110 may be a cable network adapter, a wireless network adapter, or other physical layer devices. The transmission protocol adopted by the network interface 110 is not limited herein. The network interface 110 may be an internal network interface of a video playback device in which the video stream playback system 100 is disposed. For example, if the video stream playback system 100 is disposed in a video playback device with a network function, the network interface 110 is then a wireless network adapter installed in the video playback device. The video stream playback system 100 accesses a network 150 through the network interface 110.

The remote command receiving module 120 receives remote signals issued by a remote control and converts the remote signals into corresponding operation instructions. The video stream playback system 100 executes corresponding operations according to the operation instructions.

The non-volatile storage unit 130 is built in the video stream playback system 100 or connected to the video stream playback system 100 through a connection port and a transmission cable. The non-volatile storage unit 130 may be use a flash memory as its storage medium. However, the invention is not limited thereto.

The first application program module 140 is coupled to the network interface 110, the remote command receiving module 120, and the non-volatile storage unit 130. The first application program module 140 provides a first application program 143. In the present embodiment, the first application program module 140 includes hardware components (for example, processors, chipsets, controllers, or specific circuits and storage units) and/or software components (for example, software modules or functions exclusively designed for realizing specific functions) that allows the first application program 143 to work properly. The first application program 143 uses services (for example, real-time playback of video streams provided by the first video streaming service 160) provided by the first video streaming service 160 through the network interface 110.

Below, the operation of the video stream playback system 100 will be described in detail with reference to both FIG. 1 and FIG. 2.

First, in step S210, the correspondence between a first virtual channel and the first video streaming service 160 is defined. The correspondence between a virtual channel and a video streaming service can be predetermined by the system or defined by a user. The correspondence is recorded in the non-volatile storage unit 130.

Then, in step S220, a plurality of independent video streams provided by the first video streaming service 160 is automatically linked by the first application program 143 for using the first video streaming service 160, so as to establish a first video stream list 145. Herein a user has to input correct ID and password to allow the first application program 143 to access the first video streaming service 160 through the network 150. In the present embodiment, the first video stream list 145 includes a uniform resource locator (URL) of each video stream. Besides, the first video stream list 145 may also include the title, category, length, copyright holder, and update time of each video stream.

In the present embodiment, the first application program 143 has at least one predetermined video parameter. The predetermined video parameter includes a search keyword, a video content category, and an upload time. However, the invention is not limited thereto. The first application program 143 determines which video streams provided by the first video streaming service 160 should be added to the first video stream list 145 according to the predetermined video parameter. To be specific, the first application program 143 determines whether the current time matches a list re-establishing time point. If so, the first application program 143 searches for one or more video streams satisfying the predetermined video parameter among all the video streams provided by the first video streaming service 160 and records the URL of each of the video streams into the first video stream list 145. Herein the list re-establishing time point may be a predetermined daily time point, a time point when the video playback device system 100 receives a video data update notification from the first video streaming service 160 through the network 150, a time point when the remote command receiving module 120 receives a first channel select command corresponding to the first virtual channel issued by the user, and a time point when the remote command receiving module 120 receives a user-forced update command issued by the user. However, the list re-establishing time point in the invention is not limited to foregoing examples.

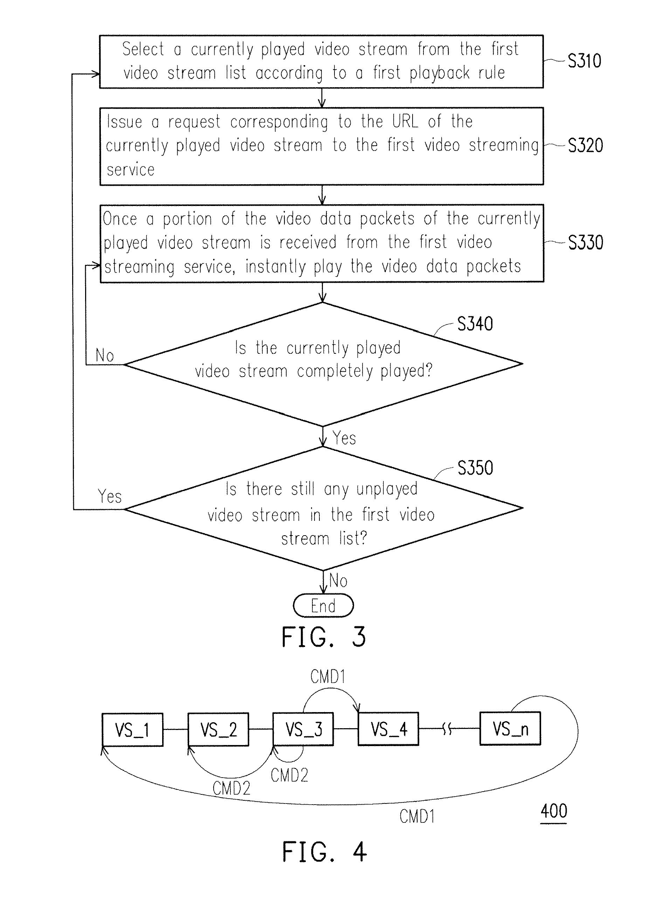

Next, in step S230, when the remote command receiving module 120 receives a first channel select command corresponding to the first virtual channel, the first application program 143 automatically obtains the video streams from the first video streaming service 160 through the network interface 110 according to the first video stream list 145 and continuously plays all the video streams in the first video stream list 145. In the present embodiment, when the video stream playback system 100 is disposed in the video playback device, the first application program module 140 installs the first application program 143 into the video playback device so that the first application program 143 resides in the video playback device. However, in case the first application program 143 is manually closed by the user, the first application program module 140 automatically confirms that the first application program 143 is started every time when a first channel select command corresponding to the first virtual channel is received. Below, how the first application program 143 automatically and continuously plays the video streams according to the first video stream list 145 will be described in detail with reference to FIG. 3.

First, in step S310, the first application program 143 selects a currently played video stream among all the video streams in the first video stream list 145 according to a first playback rule. Herein the first playback rule may be sequential playback, random playback, or playback in a user-defined order.

Then, in step S320, the first application program 143 obtains the URL of the currently played video stream from the first video stream list 145 and issues a request corresponding to the URL to the first video streaming service 160 through the network interface 110.

After receiving the request, the first video streaming service 160 starts to transmit a plurality of video data packets generated by breaking down the currently played video stream. In step S330, once the first application program 143 receives a portion of the video data packets related to the currently played video stream from the first video streaming service 160, it re-combines the video data packets and instantly plays these video data packets so that the user can watch the video stream through the video playback device.

Next, in step S340, the first application program 143 determines whether the currently played video stream is completely played. If the currently played video stream is not completely played, step S330 is executed again to instantly play video data packets that are subsequently received.

If the currently played video stream has been completely played, in step S350, the first application program 143 determines whether there is still any unplayed video stream in the first video stream list 145. If so, step S310 is executed again to select the next currently played video stream according to the first playback rule, and steps S320-S350 are then repeated until all the video streams in the first video stream list 145 are played.

As shown in FIG. 2 and FIG. 3, the user simply selects a virtual channel by using a remote control, and the video stream playback system 100 then automatically and continuously plays independent video streams provided by the first video streaming service corresponding to the virtual channel. It should be noted that foregoing embodiment is described by assuming that the video stream playback system 100 supports only one virtual channel. However, the invention is not limited thereto. In other words, the video stream playback system 100 can also record the one-to-one correspondences between multiple virtual channels and multiple video streaming services, and when a user selects any one of the virtual channels, a corresponding application program automatically and continuously plays the independent video streams provided by the corresponding video streaming service. Thereby, the user can watch video streams provided by different video streaming services in the way of operating a conventional TV.

It should be mentioned that in another embodiment of the invention, every time when the first application program 143 selects a currently played video stream from the first video stream list 145 according to the first playback rule, the first application program 143 first determines whether a file of the currently played video stream has been completely loaded into the non-volatile storage unit 130 in advance. If the file of the currently played video stream has been completely loaded into the non-volatile storage unit 130, the first application program 143 directly accesses the non-volatile storage unit 130 to play the pre-loaded currently played video stream. Otherwise, if the file of the currently played video stream is not completely loaded into the non-volatile storage unit 130 in advance, the first application program 143 issues the corresponding request to the first video streaming service 160 through the network interface 110. Accordingly, the user can directly watch the contents of all the pre-loaded video streams by selecting a virtual channel after the user powers on the video playback device disposed with the video stream playback system 100.

In the embodiment described above, every time after a currently played video stream is played, if the file of the currently played video stream is not completely loaded into the non-volatile storage unit 130 in advance, the first application program 143 backs up the file of the currently played video stream into the non-volatile storage unit 130. Accordingly, when the user selects this virtual channel again, the first application program 143 can directly obtain the video stream from the non-volatile storage unit 130 and play the same.

In an embodiment, when the first application program 143 plays a currently played video stream, video streams can be switched and played according to video stream switch commands received by the remote command receiving module 120. For example, the user issues a first video stream switch command and a second video stream switch command by respectively pressing the "Next" key and the "Previous" key on the remote control. If the remote command receiving module 120 receives a first video stream switch command when a currently played video stream is played, the first application program 143 first determines whether the currently played video stream is the last video stream in the first video stream list 145. If the currently played video stream is the last video stream in the first video stream list 145, the first application program 143 switches to play the first video stream in the first video stream list 145. Otherwise, if the currently played video stream is not the last video stream in the first video stream list 145, the first application program 143 switches to play the video stream next to the currently played video stream in the first video stream list 145. If the remote command receiving module 120 receives a second video stream switch command when a currently played video stream is played, the first application program 143 starts to play the currently played video stream from the beginning. However, if the remote command receiving module 120 continuously receives the second video stream switch command twice in a short time (for example, within 1 second) when a currently played video stream is played, the first application program 143 switches to play the video stream prior to the currently played video stream in the first video stream list 145. Thereby, video streams can be skipped or repeated according to the user's requirement.

FIG. 4 is a diagram illustrating how video streams are switched and played according to an embodiment of the invention. Referring to FIG. 4, it is assumed that the video stream list 400 includes n video streams VS_1-VS_n, and the currently played video stream is the video stream VS_3. If a user inputs a first video stream switch command CMD1 with a remote control when the video stream VS_3 is played, because the video stream VS_3 is not the last video stream in the video stream list 400, the first application program 143 switches to the next video stream VS_4 and plays the video stream VS_4 from the beginning. If the user inputs a second video stream switch command CMD2 with the remote control, the first application program 143 plays the video stream VS_3 from the beginning. If the user wants to play the previous video stream VS_2, the user needs to quickly and continuously input the second video stream switch command CMD2 twice. If the currently played video stream is the video stream VS_n, since it is the last video stream in the video stream list 400, the first application program 143 switches to play the first video stream VS_1 in the video stream list 400 when the user inputs a first video stream switch command CMD1 during the playback of the video stream VS_n.

Besides switching and playing video streams while playing the currently played video stream, the first application program 143 also forwards or backwards a predetermined number of seconds according to a rewind command and a fast forward command received by the remote command receiving module 120. To be specific, if the remote command receiving module 120 receives a rewind command when the currently played video stream is played, the first application program 143 moves the current playback position of the currently played video stream backward for the predetermined number of seconds and then continues to play the currently played video stream. If the remote command receiving module 120 receives a fast forward command, the first application program 143 moves the current playback position of the currently played video stream forward for the predetermined number of seconds and then continues to play the currently played video stream. For example, assuming the predetermined number of seconds is 30 seconds, if the user inputs a fast forward command when the currently played video stream has been played for 5 minutes and 12 seconds, the first application program 143 jumps forward to the position corresponding to 5 minutes and 42 seconds and then continues to play the currently played video stream. If the user inputs a rewind command when the currently played video stream has been played for 5 minutes and 12 seconds, the first application program 143 jumps backward to the position corresponding to 4 minutes and 42 seconds and then continues to play the currently played video stream.

In another embodiment, because the user may terminate the video stream the user is currently watching due to some reasons, the video stream playback system 100 automatically records the terminated video stream and at where the video stream is terminated (referred to as a playback stop position thereinafter), and when next time the user powers on the video stream playback system 100 or switches back to this virtual channel, the video stream playback system 100 automatically continues to play the video stream.

In order to accomplish the function mentioned above, when the first application program 143 plays a currently played video stream, it records the current playback position of the currently played video stream as a playback stop position at regular intervals (for example, at intervals of a predetermined time period) or when a special event occurs. Herein the predetermined time period may be 30 seconds. However, the invention is not limited thereto. The special event includes that the remote command receiving module 120 receives a playback pause command, that the remote command receiving module 120 receives a channel switch command, a network interruption, and executing a shutdown procedure of the video playback device disposed with the video stream playback system 100. Every time when the first application program 143 is about to play a currently played video stream, the first application program 143 determines whether the currently played video stream has a previous playback record. Herein the previous playback record includes the position at where previously the currently played video stream is stopped (referred to as a playback stop position thereinafter). If the currently played video stream has no previous playback record, the first application program 143 plays the currently played video stream from the beginning. Otherwise, if the currently played video stream has a previous playback record, the first application program 143 continues to play the currently played video stream by starting from the playback stop position.

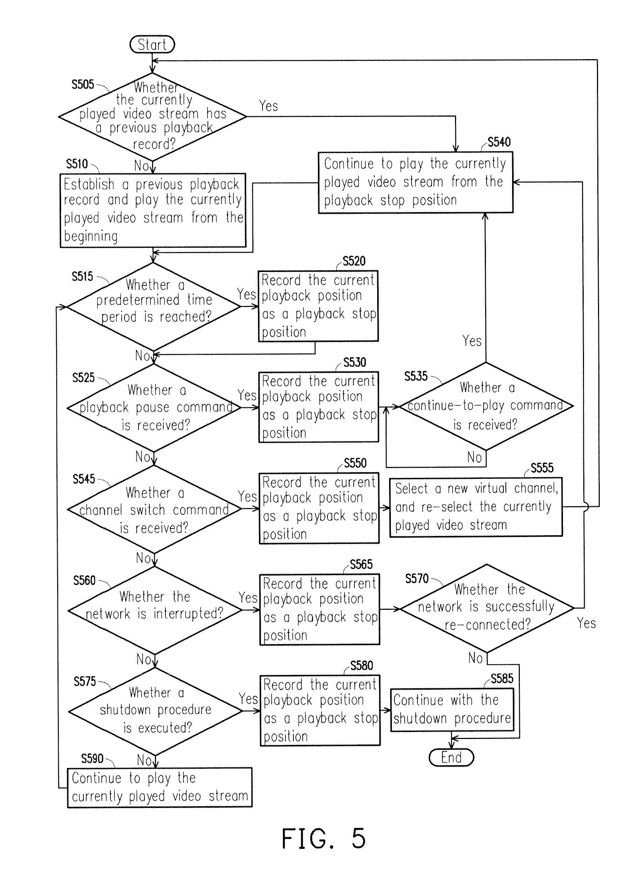

Below, how to establish a previous playback record and play a video stream according to the previous playback record will be described in detail with reference to FIG. 5.

Referring to FIG. 5, after a currently played video stream is selected from the first video stream list, in step S505, the first application program 143 determines whether the currently played video stream has a previous playback record.

If the currently played video stream does not have a previous playback record, in step S510, the first application program 143 establishes a previous playback record and plays the currently played video stream from the beginning. The previous playback record may be stored in the non-volatile storage unit 130.

Then, in step S515, the first application program 143 determines whether a predetermined time period (for example, 30 seconds) has been reached.

If the predetermined time period has been reached, in step S520, the first application program 143 records the current playback position as a playback stop position. If the predetermined time period has not been reached, in step S525, the first application program 143 determines whether the remote command receiving module 120 receives a playback pause command. In the present embodiment, the playback pause command may be triggered by a user by pressing a pause key on a remote control. In other embodiments, if the video stream playback system 100 is connected to a communication system or an instant messaging system, a playback pause command is automatically triggered when an incoming call or an instant message is received.

If the remote command receiving module 120 receives a playback pause command, in step S530, the first application program 143 records the current playback position as a playback stop position. Next, in step S535, the first application program 143 repeatedly determines whether the remote command receiving module 120 receives a continue-to-play command. The continue-to-play command may be triggered by the user by pressing a play/replay key on the remote control or automatically triggered when a call or an instant messaging session is ended. Once the continue-to-play command is received, in step S540, the first application program 143 obtains the previous playback record of the currently played video stream from the non-volatile storage unit 130 and continues to play the currently played video stream from the playback stop position according to the previous playback record. The procedure in the present embodiment returns to step S515 and continues with subsequent steps.

If the first application program 143 determines that the remote command receiving module 120 does not receive a playback pause command in step S525, in step S545, the first application program 143 determines whether the remote command receiving module 120 receives a channel switch command. If the remote command receiving module 120 receives a channel switch command, in step S550, the first application program 143 records the current playback position as a playback stop position. Next, in step S555, a new virtual channel is selected in response to the channel switch command, and the currently played video stream is also re-selected. The procedure in the present embodiment returns to step S505 to determine whether the new currently played video stream has a previous playback record and continues with subsequent steps.

If the first application program 143 determines that the remote command receiving module 120 does not receive a channel switch command in step S545, in step S560, whether the network is interrupted is determined. If a network interruption occurs, in step S565, the first application program 143 records the current playback position as a playback stop position. After that, in step S570, whether the network is successfully re-connected is determined. If the network is not successfully re-connected, the procedure in the present embodiment is ended. If the network is successfully re-connected, the procedure in the present embodiment returns to step S540 and continues with subsequent steps.

If it is determined in step S560 that the network is not interrupted, in step S575, whether a shutdown procedure is executed is determined. If no shutdown procedure is executed, in step S590, the currently played video stream is continuously played, and the procedure in the present embodiment returns to step S515 and continues with subsequent steps.

If it is determined in step S575 that the shutdown procedure is executed, in step S580, the first application program 143 records the current playback position as a playback stop position, and in step S585, the shutdown procedure is continued to end the procedure in the present embodiment.

In another embodiment, when the user watches a video stream, the user can issue a menu display command by pressing an option key or a tool key on the remote control. After the remote command receiving module 120 receives the menu display command, it displays an on-screen display (OSD). Herein the OSD may be displayed on the display of the video playback device or an external display. The OSD includes a list sorting option, a repeat playback option, and a random playback option. The user can select a desired option and change the settings accordingly with the remote control.

To be specific, when the remote command receiving module 120 receives a select command corresponding to the list sorting option, the first application program 143 selects a sorting rule in response to the select command and re-sorts all the video streams in the first video stream list 145 according to the sorting rule. Herein the sorting rule may be sorting based on a predetermined rule, sorting based on upload time, or sorting based on title.

When the remote command receiving module 120 receives a select command corresponding to the repeat playback option, the first application program 143 sets the repeated playback mode (for example, repeatedly playing all the video streams, repeatedly playing a single video streams, or no repeated playback) of the first video stream list 145 in response to the select command.

When the remote command receiving module 120 receives a select command corresponding to the random playback option, the first application program 143 turns on or off the random playback mode of the first video stream list in response to the select command.

In the embodiments described above, each virtual channel is corresponding to one video streaming service. In other words, when a specific virtual channel is selected by the user, the video stream playback system 100 automatically and continuously plays the independent video streams provided by the same video streaming service in the video stream list. However, in following embodiment, a virtual channel may be corresponding to more than one video streaming service. Namely, after the user selects the virtual channel, independent video streams provided by different video streaming services are automatically and continuously played.

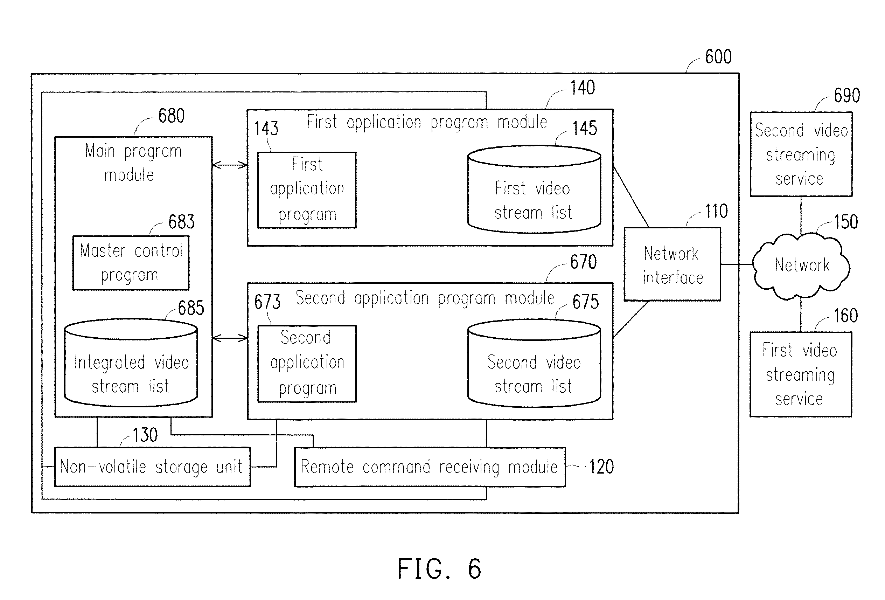

FIG. 6 is a diagram of a video stream playback system according to another embodiment of the invention. Referring to FIG. 6, the video stream playback system 600 includes a network interface 110, a remote command receiving module 120, a non-volatile storage unit 130, a first application program module 140, a second application program module 670, and a main program module 680. The network interface 110, the remote command receiving module 120, the non-volatile storage unit 130, and the first application program module 140 have the same or similar functions as the corresponding components in FIG. 1 therefore will not be described herein.

In the present embodiment, the second application program module 670 is coupled to the network interface 110, the remote command receiving module 120, and the non-volatile storage unit 130. The second application program module 670 provides a second application program 673 for using a second video streaming service 690.

The main program module 680 is coupled to the remote command receiving module 120, the non-volatile storage unit 130, the first application program module 140, and the second application program module 670. The main program module 680 provides a master control program 683. The master control program 683 resides in a video playback device in which the video stream playback system 600 is disposed. The first application program 143 and the second application program 673 are coroutines of the master control program 683. To be specific, the first application program 143 and the second application program 673 can be implemented as plug-in software or collaborative software. However, the implementation of the first application program 143 and the second application program 673 is not limited herein. If the first application program 143 and the second application program 673 are implemented as plug-in software, the first application program 143 and the second application program 673 cannot operate independently and have to be controlled by the main program module 680. If the first application program 143 and the second application program 673 are implemented as collaborative software, the first application program 143 and the second application program 673 can operate independently. Regardless of how the application programs are implemented, the main program module 680 can initialize the first application program 143 and the second application program 673 through function call, confirm the states of the first application program 143 and the second application program 673, and request the first application program 143 and the second application program 673 to send information back or execute specific functions.

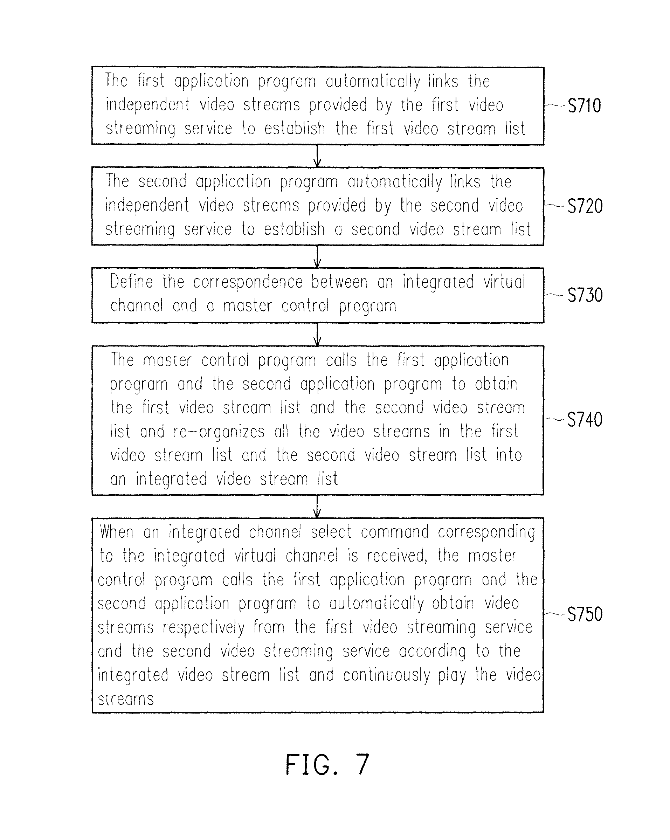

FIG. 7 is a flowchart of a video stream playback method according to another embodiment of the invention. Please refer to both FIG. 6 and FIG. 7.

First, in step S710, the first application program 143 automatically links the independent video streams provided by the first video streaming service 160 to establish the first video stream list 145. In step S720, the second application program 673 automatically links the independent video streams provided by the second video streaming service 690 to establish a second video stream list 675. Herein the user has to enter correct ID and password to allow the first application program 143 and the second application program to access the first video streaming service 160 and the second video streaming service 690. The technique adopted by the first application program 143 and the second application program 673 for respectively establishing the corresponding video stream lists is the same as or similar to that in the embodiments described above therefore will not be described herein.

In step S730, the correspondence between an integrated virtual channel and a master control program 683 is defined. The correspondence can be predetermined by the video stream playback system 600 or defined by the user. The correspondence is recorded in the non-volatile storage unit 130.

Next, in step S740, the master control program 683 calls the first application program 143 and the second application program 673 to provide the first video stream list 145 and the second video stream list 675 through function call. After obtaining the first video stream list 145 and the second video stream list 675, the master control program 683 re-organizes all the video streams in the first video stream list 145 and the second video stream list 675 in an integrated video stream list 685. To be specific, the master control program 683 first checks which application programs can be connected and then initializes all the connectable application programs. After that, the master control program 683 obtains the video stream list established by each application program. All the video streams may be re-organized in the integrated video stream list 685 by adding video streams originally belonging to the first video stream list 145 and the second video stream list 675 to the integrated video stream list 685 or by pre-selecting the video streams according to a user-defined condition or a system default condition.

In the last step S750, when the remote command receiving module 120 receives an integrated channel select command corresponding to the integrated virtual channel, the master control program 683 calls the first application program 143 and the second application program 673 to automatically obtain accessible video streams respectively from the first video streaming service 160 and the second video streaming service 690 through the network interface 110 according to the integrated video stream list and continuously plays these independent video streams through the first application program 143 and the second application program 673.

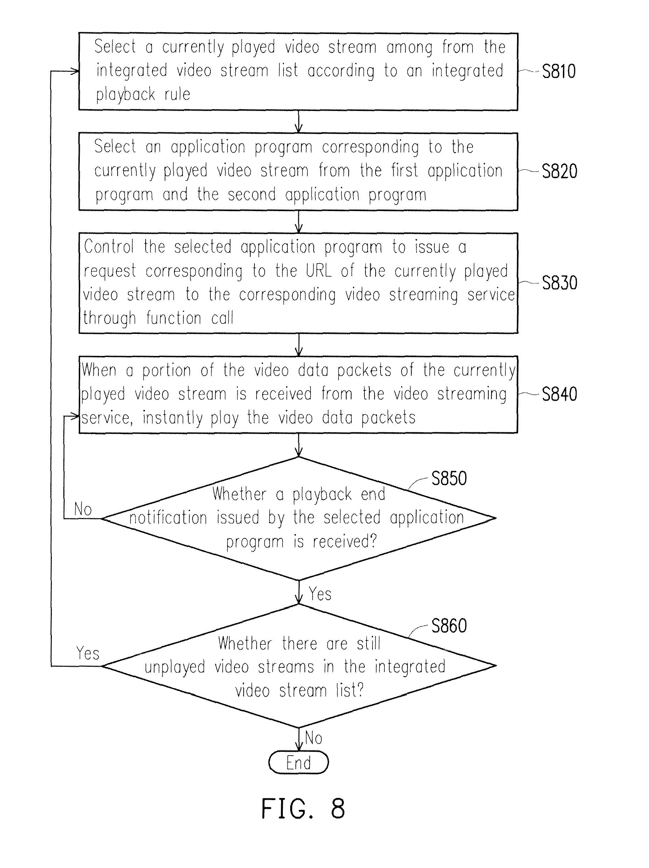

Below, how the master control program 683 automatically and continuously plays video streams according to an integrated video stream list will be described in detail with reference to FIG. 8.

First, in step S810, the master control program 683 selects a currently played video stream among all the video streams in the integrated video stream list 685 according to an integrated playback rule. Herein the integrated playback rule may be sequentially playing all video streams, alternatively playing video streams of different categories, or playing video streams of a specific category.

In step S820, the master control program 683 selects an application program corresponding to the currently played video stream from the first application program 143 and the second application program 673. Namely, an application program suitable for playing the currently played video stream is selected.

In step S830, the master control program 683 controls the selected application program to issue a request corresponding to the URL of the currently played video stream to the corresponding video streaming service through function call.

In step S840, when a portion of the video data packets of the currently played video stream is received from the video streaming service, the video data packets are instantly played.

In step S850, the master control program 683 determines whether a playback end notification of the currently played video stream issued by the selected application program is received. If no playback end notification is received, step S840 is executed again to repeatedly play the received video data packets. If a playback end notification is received from the selected application program, in step S860, the master control program 683 determines whether there are still unplayed video streams in the integrated video stream list 685. If there are still unplayed video streams in the integrated video stream list 685, the procedure returns to step S810 and the steps described above are repeated. If there is no more unplayed video stream in the integrated video stream list 685, the procedure in the present embodiment is ended.

If the remote command receiving module 120 receives an integrated playback rule update command or a video stream switch command when a currently played video stream is played, the master control program 683 re-selects a currently played video stream according to the integrated playback rule update command or the video stream switch command. Then, the master control program 683 selects an application program corresponding to the currently played video stream from the first application program 143 and thesecond application program 673. After that, the master control program 683 controls the selected application program to issue a request corresponding to the URL of the currently played video stream to the corresponding video streaming service through function call, so as to instantly play a portion of the video data packets of the currently played video stream when the portion of the video data packets is received from the video streaming service. When the master control program 683 receives a playback end notification of the currently played video stream issued by the selected application program, the master control program 683 repeats the operations of selecting a currently played video stream, selecting the corresponding application program, and controlling the selected application program to instantly play the currently played video stream through function call until all the video streams in the integrated video stream list have been played.

It has to be stated that in the present embodiment, even though it is the master control program 683 that selects the currently played video stream from the integrated video stream list 685, it is the first application program 143 or the second application program 673 that actually plays the video stream. Accordingly, when the first application program 143 or the second application program 673 plays a currently played video stream, the first application program 143 or the second application program 673 also forwards or backwards the video stream in response to a rewind command or a fast forward command received by the remote command receiving module 120 and displays an OSD in response to a menu display command received by the remote command receiving module 120. Additionally, the playback stop position of each currently played video stream can be recorded so that next time the same video stream can be continuously played. Moreover, the video streams can be pre-loaded, and a pre-loaded video stream can be selected and played. The functions supported by each application program while playing a currently played video stream are the same as those described in foregoing embodiments therefore will not be described herein.

In another embodiment, when a user watches a video stream, the user can issue a menu display command by pressing an option key or a tool key on a remote control. After the remote command receiving module 120 receives the menu display command, the video playback device displays an OSD including a category list option. After the user selects this option by using the remote control, the video playback device displays the video content categories corresponding to all the video streams. After the remote command receiving module 120 receives a select command corresponding to a specific video content category, the master control program 683 selects all the video streams belonging to this specific video content category from the integrated video stream list 685 according to the select command and controls the application programs suitable for playing aforementioned video streams to issue requests to the corresponding video streaming services, so as to instantly play the video streams belonging to the video content category selected by the user in the integrated video stream list 685.

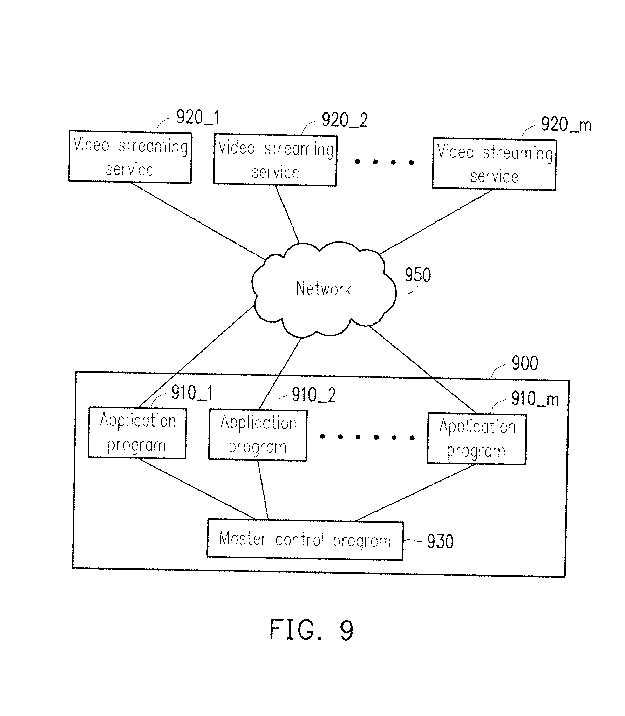

FIG. 9 is a diagram of a video stream playback system according to yet another of the invention. Referring to FIG. 9, the video stream playback system 900 in the present embodiment executes m application programs (application programs 910_1-910_m). The application programs 910_1-910_m are provided by m application program modules (not shown) and are used for playing video streams provided by video streaming services 920_1-920_m through a network 950. It should be noted that the application programs 910_1-910_m are respectively corresponding to the video streaming services 920_1-920_m. Namely, each application program is suitable for playing only the video streams provided by the corresponding video streaming service.

The application programs 910_1-910_m are coroutines of a master control program 930 (provided by a main program module, not shown). Namely, the master control program 930 controls the application programs 910_1-910_m to provide information, play video streams, and execute related operations through function call.

Moreover, even though not shown in FIG. 9, the video stream playback system 900 further includes other components, such as a network interface, a remote command receiving module, and a non-volatile storage unit. The network interface is coupled to the m application program modules to connect the application programs 910_1-910_m to the network. Both the remote command receiving module and the non-volatile storage unit are coupled to the m application program modules and the main program module. The remote command receiving module is configured to receive various operation commands, and the non-volatile storage unit is used for storing pre-loaded video streams or backing up the video streams.

In the present embodiment, the application programs 910_1-910_m respectively establish their video stream lists according to the video streams provided by the video streaming services 920_1-920_m and continuously play the video streams in the video stream lists. To be specific, the application programs 910_1-910_m are respectively corresponding to a virtual channel. When the remote command receiving module receives a channel select command corresponding to a specific virtual channel, the corresponding application program automatically and continuously plays the video streams in the video stream list thereof. For example, assuming that the application program 910_1 and the application program 910_2 are respectively corresponding to a virtual channel 85 and a virtual channel 95, when the user inputs the channel number 85 with a remote control, the application program 910_1 automatically and continuously plays the video streams in its video stream list. When the user inputs the channel number 95 with a remote control, the application program 910_2 automatically and continuously plays the video streams in its video stream list. In other words, instead of selecting and playing each video stream manually, the user can watch independent video streams linked by an application program on a virtual channel by simply inputting the channel number of the virtual channel.

Moreover, the master control program 930 is also corresponding to a virtual channel (for example, a virtual channel 99). The master control program 930 calls the application programs 910_1-910_m to provide their video stream lists and establishes an integrated video stream list according to these video stream lists. In other words, the integrated video stream list includes video streams provided by different video streaming services. When the user is about to watch video streams provided by different video streaming services on a single virtual channel, the user inputs the channel number 99 by using a remote control, and the master control program 930 selects a suitable application program to continuously play the video streams in the integrated video stream list that are independent to each other and provided by the same or different video streaming services.

As described above, the invention provides a method and a system for playing video streams, in which the correspondence between a virtual channel and an application program is defined so that independent video streams can be automatically and continuously played on the same virtual channel. Thereby, a user can simply select a virtual channel and then directly watch independent video streams that are automatically and continuously played. Namely, the user can watch video streams in the same way as the user operates a conventional TV. In other words, the user needs not to select and play each video stream manually but can watch these video streams in a very convenient way.

## Claims

1. A video stream playback method, adapted to a video playback device with a network function, the video stream playback method comprising:
defining (S210) a correspondence between a first virtual channel and a first video streaming service (160), wherein a first application program (143) for using the first video streaming service (160) is installed in the video playback device;
automatically (S220) linking a plurality of independent video streams provided by the first video streaming service (160) by using the first application program (143) to establish a first video stream list (145), wherein the first video stream list (145) comprises a uniform resource locator (URL) of each of the video streams; and
when (S230) the video playback device receives a first channel select command corresponding to the first virtual channel, automatically obtaining the video streams from the first video streaming service (160) according to the first video stream list (145) and continuously playing the video streams by using the first application program (143).

2. The video stream playback method according to claim 1, wherein the first application program (143) has at least one predetermined video parameter, the at least one predetermined video parameter comprises a search keyword, a video content category, and an upload time, and the step of establishing the first video stream list (145) by using the first application program (143) comprises:
determining whether a current time matches a list re-establishing time point, wherein the list re-establishing time point comprises a predetermined daily time point, a time point when the video playback device receives a video data update notification from the first video streaming service (160), a time point when the video playback device receives the first channel select command, and a time point when the video playback device receives a user-forced update command;
when the current time matches the list re-establishing time point, searching for the video streams satisfying the at least one predetermined video parameter among all the video streams provided by the first video streaming service (160); and
recording the URL of each of the video streams into the first video stream list (145).

3. The video stream playback method according to any one of claims 1 to 2, wherein the step of automatically obtaining the video streams from the first video streaming service (160) according to the first video stream list (145) and continuously playing the video streams by using the first application program (143) when the video playback device receives the first channel select command comprises:
selecting (S310) a currently played video stream among the video streams in the first video stream list (145) according to a first playback rule;
issuing (S320) a request corresponding to the URL of the currently played video stream to the first video streaming service (160) through a network, so as to instantly play (S330) a portion of video data packets of the currently played video stream transmitted by the first video streaming service (160) in the video playback device when the portion of the video data packets is received; and
repeating the steps of selecting the currently played video stream and issuing the request corresponding to the URL of the currently played video stream until all the video streams are played.

4. The video stream playback method according to claim 3, wherein after the step of selecting the currently played video stream, the video stream playback method further comprises:
determining whether a file of the currently played video stream is completely loaded into a non-volatile storage unit (130) of the video playback device in advance by using the first application program (143);
when the file of the currently played video stream is completely loaded into the non-volatile storage unit (130) in advance, directly playing the currently played video stream by using the first application program (143); and
when the file of the currently played video stream is not completely loaded into the non-volatile storage unit (130) in advance, issuing the request to the first video streaming service (160) by using the first application program (143), and backing up the file of the currently played video stream to the non-volatile storage unit (130) after the currently played video stream is played

5. The video stream playback method according to claim 3 further comprising:
when the currently played video stream is played and the video playback device receives a first video stream switch command (CMD1), determining whether the currently played video stream is the last video stream in the first video stream list (145) by using the first application program (143);
when the currently played video stream is the last video stream in the first video stream list (145), playing the first video stream in the first video stream list (145) by using the first application program (143); and
when the currently played video stream is not the last video stream in the first video stream list (145), playing the video stream next to the currently played video stream in the first video stream list (145) by using the first application program (143).

6. The video stream playback method according to claim 5 further comprising:
when the currently played video stream is played and the video playback device receives a second video stream switch command (CMD2), playing the currently played video stream from the beginning by using the first application program (143); and
when the currently played video stream is played and the video playback device continuously receives the second video stream switch command (CMD2) twice, playing the video stream prior to the currently played video stream in the first video stream list (145) by using the first application program (143).

7. The video stream playback method according to claim 3, wherein after the step of selecting the currently played video stream, the video stream playback method further comprises:
determining (S505) whether the currently played video stream has a previous playback record by using the first application program (143), wherein the previous playback record comprises a playback stop position of the currently played video stream;
when the currently played video stream does not have the previous playback record, playing (S510) the currently played video stream from the beginning by using the first application program (143); and
when the currently played video stream has the previous playback record, continuing (S540) to play the currently played video stream from the playback stop position by using the first application program (143).

8. The video stream playback method according to claim 7 further comprising:
when the currently played video stream is played, recording (S520) a current playback position of the currently played video stream as the playback stop position at intervals of a predetermined time period by using the first application program (143); and
when the currently played video stream is played and every time a special event occurs, recording (S530, S550, S565, S580) a current playback position of the currently played video stream as the playback stop position by using the first application program (143), wherein the special event comprises that the video playback device receives a playback pause command, that the video playback device receives a channel switch command, a network interruption, and execution of a shutdown procedure of the video playback device.

9. The video stream playback method according to claim 3 further comprising:
when the currently played video stream is played and the video playback device receives a menu display command, displaying an on-screen display (OSD) in the video playback device, wherein the OSD comprises a list sorting option, a repeat playback option, and a random playback option;
when the video playback device receives a select command corresponding to the list sorting option, selecting a sorting rule in response to the select command by using the first application program (143) to re-sort the video streams in the first video stream list (145), wherein the sorting rule comprises sorting based on a predetermined rule, sorting based on upload time, and sorting based on title;
when the video playback device receives a select command corresponding to the repeat playback option, setting a repeated playback mode of the first video stream list (145) in response to the select command by using the first application program (143), wherein the repeated playback mode comprises repeatedly playing all video streams, repeatedly playing a single video stream, and no repeated playback; and
when the video playback device receives a select command corresponding to the random playback option, turning on or off a random playback mode of the first video stream list (145) in response to the select command by using the first application program (143).

10. A video stream playback method, adapted to a video playback device with a network function, wherein a first application program (143) for using a first video streaming service (160) and a second application program (673) for using a second video streaming service (690) are installed in the video playback device, the video stream playback method comprising:
automatically (S710) linking a plurality of independent video streams provided by the first video streaming service (160) by using the first application program (143) to establish a first video stream list (145);
automatically (S720) linking a plurality of independent video streams provided by the second video streaming service (690) by using the second application program (673) to establish a second video stream list (675);
defining (S730) a correspondence between a integrated virtual channel and a master control program (683), wherein the first application program (143) and the second application program (673) are coroutines of the master control program (683);
calling (S740) the first application program (143) and the second application program (673) by using the master control program (683) to obtain the first video stream list (145) and the second video stream list (675);
re-organizing (S740) all the video streams in the first video stream list (145) and the second video stream list (675) into an integrated video stream list (685) by using the master control program (683); and
when (S750) the video playback device receives an integrated channel select command corresponding to the integrated virtual channel, calling the first application program (143) and the second application program (673) to automatically obtain the video streams respectively from the first video streaming service (160) and the second video streaming service (690) according to the integrated video stream list (685) and continuously play the video streams by using the master control program (683).

11. The video stream playback method according to claim 10, wherein the step of calling the first application program (143) and the second application program (673) to automatically obtain the video streams respectively from the first video streaming service (160) and the second video streaming service (690) according to the integrated video stream list (685) and continuously play the video streams by using the master control program (683) when the video playback device receives the integrated channel select command corresponding to the integrated virtual channel comprises:
selecting (S810) a currently played video stream among all the video streams in the integrated video stream list (685) according to an integrated playback rule;
selecting (S820) an application program corresponding to the currently played video stream from the first application program (143) and the second application program (673);
controlling (S830) the selected application program to issue a request corresponding to a URL of the currently played video stream to a corresponding video streaming service through function call, so as to instantly play (S840) a portion of video data packets of the currently played video stream transmitted by the corresponding video streaming service when the portion of the video data packets is received; and
when a playback end notification of the currently played video stream issued by the selected application program is received, repeating the steps of selecting the currently played video stream, selecting the corresponding application program, and controlling the selected application program to instantly play the currently played video stream through function call until all the video streams in the integrated video stream list (685) are played.

12. The video stream playback method according to claim 11 further comprising:
when the currently played video stream is played and the video playback device receives an integrated playback rule update command or a video stream switch command, re-selecting the currently played video stream according to the integrated playback rule update command or the video stream switch command by using the master control program (683);
selecting an application program corresponding to the currently played video stream from the first application program (143) and the second application program (673);
controlling the selected application program to issue the request corresponding to the URL of the currently played video stream to the corresponding video streaming service through function call, so as to instantly play a portion of video data packets of the currently played video stream transmitted by the corresponding video streaming service when the portion of the video data packets is received; and
when the playback end notification of the currently played video stream issued by the application program is received, repeating the steps of selecting the currently played video stream, selecting the corresponding application program, and controlling the selected application program to instantly play the currently played video stream through function call until all the video streams in the integrated video stream list (685) are played.

13. A video stream playback system (100), comprising:
a network interface (110);
a remote command receiving module (120);
a non-volatile storage unit (130), recording a correspondence between a first virtual channel and a first video streaming service (160); and
a first application program module (140), coupled to the network interface (110), the remote command receiving module (120), and the non-volatile storage unit (130), and providing a first application program (143) for using a first video streaming service (160), wherein the first application program (143) automatically links a plurality of independent video streams provided by the first video streaming service (160) to establish a first video stream list (145), and the first video stream list (145) comprises a URL of each of the video streams,
when the remote command receiving module (120) receives a first channel select command corresponding to the first virtual channel, the first application program (143) automatically obtains the video streams from the first video streaming service (160) through the network interface (110) according to the first video stream list (145) and continuously plays the video streams.

14. The video stream playback system (100) according to claim 13, wherein the first application program (143) has at least one predetermined video parameter, the at least one predetermined video parameter comprises a search keyword, a video content category, and an upload time, and the first application program (143) determines whether a current time matches a list re-establishing time point, wherein the list re-establishing time point comprises a predetermined daily time point, a time point when a video data update notification is received from the first video streaming service (160), a time point when the remote command receiving module (120) receives the first channel select command, and a time point when the remote command receiving module (120) receives a user-forced update command,
when the current time matches the list re-establishing time point, the first application program (143) searches for the video streams satisfying the at least one predetermined video parameter among all the video streams provided by the first video streaming service (160) and records the URL of each of the video streams into the first video stream list (145).

15. The video stream playback system (100) according to any one of claims 13 to 14, wherein the first application program (143) selects a currently played video stream among the video streams in the first video stream list (145) according to a first playback rule and issues a request corresponding to the URL of the currently played video stream to the first video streaming service (160) through the network interface (110), so as to instantly play a portion of video data packets of the currently played video stream transmitted by the first video streaming service (160) when the portion of the video data packets is received,
the first application program (143) repeats the operations of selecting the currently played video stream and issuing the corresponding request until all the video streams are played.

16. The video stream playback system (100) according to claim 15, wherein the first application program (143) determines whether a file of the currently played video stream is completely loaded into the non-volatile storage unit (130) in advance;
when the file of the currently played video stream is completely loaded into the non-volatile storage unit (130) in advance, the first application program (143) directly plays the currently played video stream,
when the file of the currently played video stream is not completely loaded into the non-volatile storage unit (130) in advance, the first application program (143) issues the request to the first video streaming service (160) through the network interface (110), and the first application program (143) backs up the file of the currently played video stream to the non-volatile storage unit (130) after the currently played video stream is played.

17. The video stream playback system (100) according to claim 15, wherein when the currently played video stream is played and the remote command receiving module (120) receives a first video stream switch command (CMD1), the first application program (143) determines whether the currently played video stream is the last video stream in the first video stream list (145),
when the currently played video stream is the last video stream in the first video stream list (145), the first application program (143) plays the first video stream in the first video stream list (145),
when the currently played video stream is not the last video stream in the first video stream list (145), the first application program (143) plays the video stream next to the currently played video stream in the first video stream list (145).

18. The video stream playback system (100) according to claim 17, wherein when the currently played video stream is played and the remote command receiving module (120) receives a second video stream switch command (CMD2), the first application program (143) plays the currently played video stream from the beginning,
when the currently played video stream is played and the remote command receiving module (120) continuously receives the second video stream switch command (CMD2) twice, the first application program (143) plays the video stream prior to the currently played video stream in the first video stream list (145).

19. The video stream playback system (100) according to claim 15, wherein the first application program (143) determines whether the currently played video stream has a previous playback record, wherein the previous playback record comprises a playback stop position of the currently played video stream,
when the currently played video stream does not have the previous playback record, the first application program (143) plays the currently played video stream from the beginning,
when the currently played video stream has the previous playback record, the first application program (143) continues to play the currently played video stream from the playback stop position.

20. The video stream playback system (100) according to claim 19, wherein when the currently played video stream is played, the first application program (143) records a current playback position of the currently played video stream as the playback stop position at intervals of a predetermined time period,
when the currently played video stream is played and every time a special event occurs, the first application program (143) records a current playback position of the currently played video stream as the playback stop position, wherein the special event comprises that the remote command receiving module (120) receives a playback pause command, that the remote command receiving module (120) receives a channel switch command, a network interruption, and execution of a shutdown procedure.

21. The video stream playback system (100) according to claim 15, wherein when the currently played video stream is played and the remote command receiving module (120) receives a menu display command, the first application program (143) displays an OSD, wherein the OSD comprises a list sorting option, a repeat playback option, and a random playback option,
when the remote command receiving module (120) receives a select command corresponding to the list sorting option, the first application program (143) selects a sorting rule in response to the select command to re-sort the video streams in the first video stream list (145), wherein the sorting rule comprises sorting based on a predetermined rule, sorting based on upload time, and sorting based on title,
when the remote command receiving module (120) receives a select command corresponding to the repeat playback option, the first application program (143) sets a repeated playback mode of the first video stream list (145) in response to the select command, wherein the repeated playback mode comprises repeatedly playing all video streams, repeatedly playing a single video stream, and no repeated playback,
when the remote command receiving module (120) receives a select command corresponding to the random playback option, the first application program (143) turns on or off a random playback mode of the first video stream list (145) in response to the select command.

22. A video stream playback system (600), comprising:
a network interface (110);
a remote command receiving module (120);
a first application program module (140), coupled to the network interface (110) and the remote command receiving module (120), providing a first application program (143) for using a first video streaming service (160) and automatically linking a plurality of independent video streams provided by the first video streaming service (160) to establish a first video stream list (145);
a second application program module (670), coupled to the network interface (110) and the remote command receiving module (120), providing a second application program (673) for using a second video streaming service (690) and automatically linking a plurality of independent video streams provided by the second video streaming service (690) to establish a second video stream list (675);
a main program module (680), coupled to the remote command receiving module (120), the first application program module (140), and the second application program module (670), and providing a master control program (683), wherein the first application program (143) and the second application program (673) are coroutines of the master control program (683); and
a non-volatile storage unit (130), coupled to the first application program module (140), the second application program module (670), and the main program module (680), and recording a correspondence between a integrated virtual channel and a master control program (683),
wherein the master control program (683) calls the first application program (143) and the second application program (673) to obtain the first video stream list (145) and the second video stream list (675) and re-organizes all the video streams in the first video stream list (145) and the second video stream list (675) into an integrated video stream list (685),
when the remote command receiving module (120) receives a integrated channel select command corresponding to the integrated virtual channel, the master control program (683) calls the first application program (143) and the second application program (673) to automatically obtain the video streams respectively from the first video streaming service (160) and the second video streaming service (690) according to the integrated video stream list (685) through the network interface (110) and continuously plays the video streams.

23. The video stream playback system (600) according to claim 22, wherein the master control program (683) selects a currently played video stream among all the video streams in the integrated video stream list (685) according to an integrated playback rule, selects an application program corresponding to the currently played video stream from the first application program (143) and the second application program (673), controls the selected application program to issue a request corresponding to a URL of the currently played video stream to a corresponding video streaming service through function call, so as to instantly play a portion of video data packets of the currently played video stream transmitted by the corresponding video streaming service when the portion of the video data packets is received,
when the master control program (683) receives a playback end notification of the currently played video stream issued by the selected application program, the master control program (683) repeats the operations of selecting the currently played video stream, selecting the corresponding application program, and controlling the selected application program to instantly play the currently played video stream through function call until all the video streams in the integrated video stream list (685) are played.

24. The video stream playback system (600) according to claim 23, wherein when the currently played video stream is played and the remote command receiving module (120) receives an integrated playback rule update command or a video stream switch command, the master control program (683) re-selects the currently played video stream according to the integrated playback rule update command or the video stream switch command, selects an application program corresponding to the currently played video stream from the first application program (143) and the second application program (673), controls the selected application program to issue the request corresponding to the URL of the currently played video stream to the corresponding video streaming service through function call, so as to instantly play a portion of video data packets of the currently played video stream transmitted by the corresponding video streaming service when the portion of the video data packets is received,
when the playback end notification of the currently played video stream issued by the application program is received, repeats the operations of selecting the currently played video stream, selecting the corresponding application program, and controlling the selected application program to instantly play the currently played video stream through function call until all the video streams in the integrated video stream list (685) are played.
